# EUROPEAN PATENT SPECIFICATION

(11) **EP 2 310 331 B1**
(45) Date of publication and mention of the grant of the patent: **08.02.2012**
(21) Application number: 09804624.6
(22) Date of filing: 29.07.2009
(51) Int. Cl.: C03B 7/06

(54) **FOREHEARTH OR WORKING-END FOR GLASS FURNACE AND PROCEDURE FOR THE EXTRACTION OF FUMES FROM THE FOREHEARTH**
VORHERD ODER BEARBEITUNGSENDE FÜR EINEN GLASOFEN UND VERFAHREN ZUR EXTRAKTION VON RAUCH AUS DEM VORHERD
AVANT-CORPS OU EXTRÉMITÉ DE TRAVAIL POUR FOUR À VERRE ET PROCÉDÉ D'EXTRACTION DE FUMÉES À PARTIR DE L'AVANT-CORPS

(30) Priority: 07.08.2008 IT PR20080050
(43) Date of publication of application: 20.04.2011
(73) Proprietor: F.I.R.E. S.r.l., 43126 Parma (IT)
(72) Inventor: BRAGLIA, Marco, 43126 Parma (IT)
(74) Representative: Monelli, Alberto
(86) International application number: PCT/IB2009/053290
(87) International publication number: WO 2010/015964

(56) References cited:
- EP-A- 0 503 883
- FR-A- 2 564 086
- DATABASE WPI Week 200359 Thomson Scientific, London, GB; AN 2003-623487 XP002534515 -& KR 2003 035 099 A (SAMSUNG CORNING CO LTD) 9 May 2003 (2003-05-09)

## Description

### TECHNICAL FIELD AND BACKGROUND ART.

The present invention relates to a forehearth or working-end for a glass furnace and a procedure for the extraction of fumes from said forehearth.

Forehearths and working-ends are thermal machines that cool and condition the glass exiting the furnace in order to bring it to the maximum thermal homogeneity at the forehearth exit ("feeder"), where the gob is created which will be subsequently fed to the automatic forming machines that mold glass objects.

The glass exiting the furnace is at a temperature of around 1350°C, whereas at the forehearth exit it has a temperature of around 1100°C.

To determine the validity of the thermal homogeneity, use is conventionally made of the "*thermal efficiency*" parameter, i.e. a number, expressed as a percentage, which depends on the temperature gradients in the final section of the forehearth. Temperatures are normally measured by 9 thermocouples disposed in a grid and the differences between one value and another are calculated. The smaller these differences are, the closer the *thermal efficiency* is to the ideal value of 100%.

The lower the temperature gradients are, the better will be the uniformity of viscosity in the gob that enters the moulds, with consequent savings in terms of the material used and a reduction in rejects.

Thermal homogeneity of the glass gob is thus pursued because it is directly linked to the homogeneity of viscosity, lacking which the products moulded from said gob could have structural defects (e.g. non-uniform walls in the case of glasses or bottles) such that they must be rejected, or would require a larger quantity of material and thus entail a higher cost (due principally to the energy consumed to produce the glass).

According to the prior art, the forehearth comprises an understructure and a superstructure in refractory material, between which the molten glass flows, in addition to combustion and cooling systems and a supporting structure.

In particular, there exist lateral burners which heat the lateral parts of the stream of molten glass, while the central part is cooled by a flow of air, so as to seek to achieve thermal homeogeneity between the central and lateral zones of the molten glass stream. In fact, the lateral zones would tend to cool more rapidly than the central zone if there were no lateral burners and if there were no central air cooling.

The forehearth is composed of various sections, i.e. independent, mutually interconnected cooling units, each of which normally comprises the same sequence of elements.

The present forehearths present, however, some significant drawbacks.

In fact, the efficiency achieved in the best glass factories for white soda-lime glass is around 95-96% and for coloured glass it is 93%-94%, whereas it would be desirable to come closer to the limit of 100%.

Another drawback is due to the fact that cracks sometimes form in the superstructure, which over the years may lead to a failure thereof, with consequent damage to production.

Another drawback is related to the fact that the cost of refractories is high, approximately proportional to the total weight of the refractory used in the specific forehearth, and in the known embodiments considerable use is made of refractory material.

Furthermore, the cost of installing refractories is high, considering the time it takes to assemble them on site. Each day of on-site work is a lost production day.

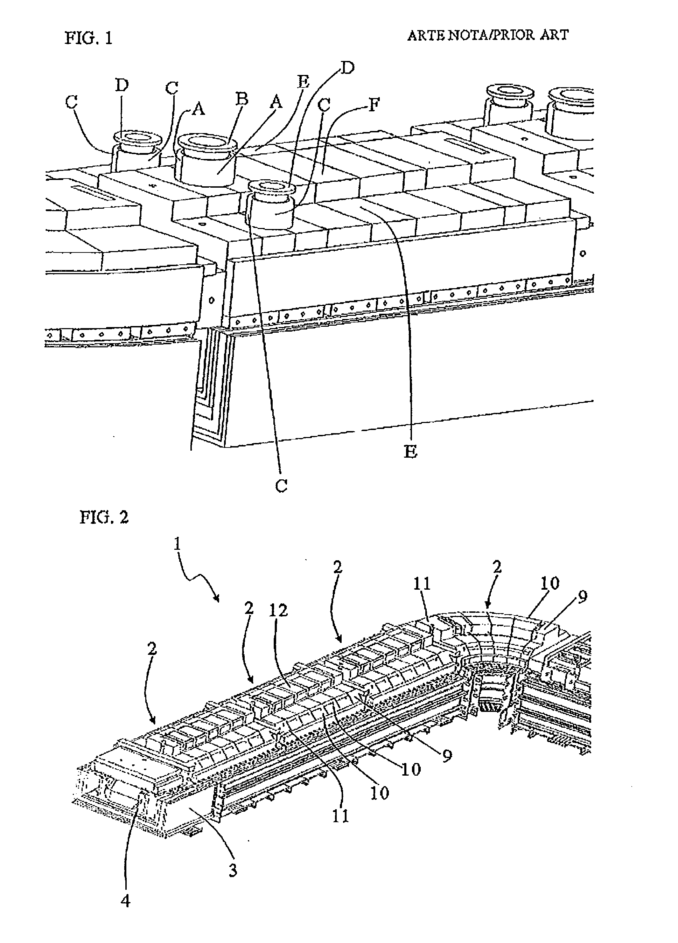

Finally, the superstructure is made up of a large number of pieces. In the best performing forehearths, in each section, besides the superstructure block, which is not standardised (it must be assembled according to a particular order defined at the "pre-installation" stage), the following types of accessories are present (in respect whereof specific reference is made to figure 1 illustrating a portion of a forehearth according to the prior art):
- lateral blocks (A) and upper block (B) of the cooling air exhaust chimney;
- lateral blocks (C) and upper block (D) of the fume exhaust chimneys;
- "L" shaped blocks (E) which define the lateral fume ducts (right and left);
- "C" shaped blocks (F) which define the central cooling air duct;
- triangular end closing elements of the lateral fume ducts;
- rectangular end closing elements of the cooling air duct.

The cost of the combustion and cooling systems is also high, because in the case of the best performing forehearths the following pipes (not illustrated) arrive in each section:
- inlet pipe of the superstructure cooling air duct and corresponding pipe for the understructure;
- pipes for the so-called "air curtains" associated with the fume exhaust chimneys and associated with the air exhaust chimney;
- combustion mixture pipes on the right and left sides.

Each pipe is electronically and/or manually controlled by means of what are called combustion and cooling ramps. The cost of the electronic controller and hardware for each ramp is considerable and is approximately proportional to the ducts leading into the forehearth.

EP-A-0503883 discloses a forehearth with a central cooling air duct and lateral fume ducts, said cooling air and fumes having separate outlets.

FR-A-2564086 discloses a forehearth having a common outlet for cooling air and fumes.

In this context, the technical task at the basis of the present invention is to provide a forehearth that overcomes the drawbacks of the above-mentioned prior art and to achieve a better extraction of fumes.

### DISCLOSURE OF THE INVENTION.

In particular, it is an object of the present invention to make available a forehearth capable of obtaining a greater thermal homogeneity of the glass.

A further object of the present invention is to provide a forehearth in which the risk of cracks in the superstructure is reduced and in which the overall use of refractory material is reduced.

Another object is to facilitate assembly of the superstructure by decreasing the number of different elements of which it is composed.

The defined technical task and the specified objects hereof are substantially achieved by a forehearth and a fume extraction procedure comprising the technical characteristics described in one or more of the appended claims.

### BRIEF DESCRIPTION OF DRAWINGS.

Further characteristics and advantages of the present invention will become more apparent from the following approximate, and hence non-restrictive, description of a preferred, but not exclusive, embodiment of a forehearth, as illustrated in the appended drawings, in which
- figure 1 shows a prior art forehearth;
- figure 2 illustrates an overall perspective view of the present forehearth;

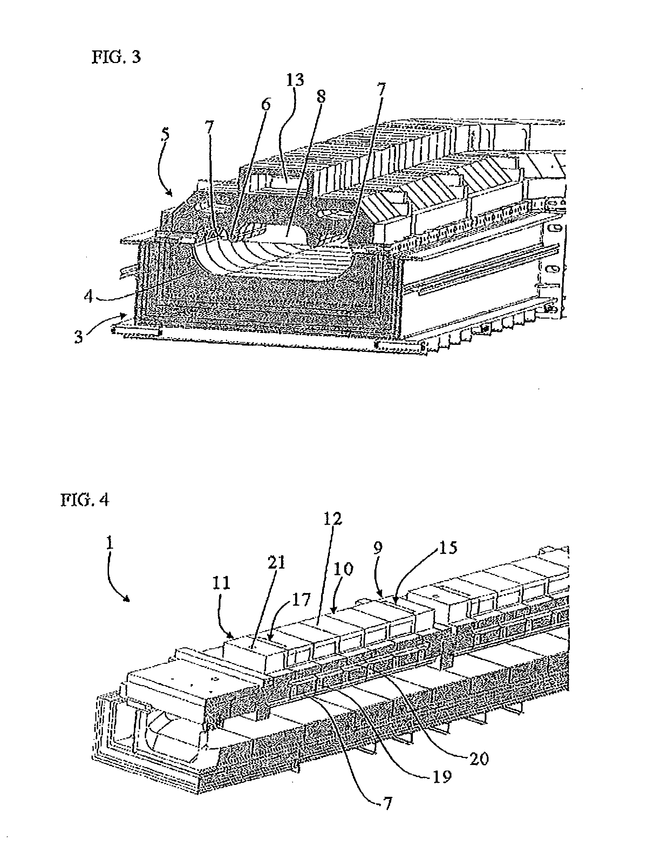

- figure 3 illustrates a vertical sectional view of the forehearth in a transverse plane in an intermediate zone of a module constituting the forehearth itself;
- figures 4 and 5 illustrate vertical sectional views of the forehearth in longitudinal planes A-A and B-B of figure 3;
- figure 6 illustrates, in the same section B-B of figure 5, an original "Venturi block" inserted in the superstructure;
- figures 7 and 8 respectively illustrate a perspective view (in which a "C" shaped element has been removed) and a vertical sectional perspective view of the "Venturi block";
- figures 9, 10 and 11 respectively illustrate a perspective view of an initial block, an intermediate block and an end block of the superstructure.

### BEST MODE FOR CARRYING OUT THE INVENTION.

With reference to the figures, 1 indicates a forehearth or working-end for a glass furnace, in the sense that it can be used either as a working-end immediately downstream of the furnace, or as a forehearth (or number of forehearths) leading from the working-end.

Therefore, when reference is made solely to the forehearth in the description, it shall be understood to mean forehearth or working-end.

Neither the combustion and cooling systems, nor the supporting structure of forehearth are illustrated in the figures, since they are of a known type.

The forehearth 1 comprises a number of sections or modules 2, which can be of a rectilinear or curvilinear type (see figure 2).

The forehearth 1, and hence the modules 2 making it up, comprise an understructure 3 in which is defined a vat 4 (preferably in high-density alumina or electro-fused refractory or refractory containing zirconium) into which molten glass flows, and a covering superstructure 5 (preferably in mullite or sillimanite).

The understructure 3 is formed of several layers of insulating material disposed in such a way that, starting from the innermost layer in contact with the vat 4 and proceeding outwardly, the layers are increasingly insulating and increasingly less resistant to high temperatures.

The understructure 3 preferably comprises at least 50 mm of microporous panel.

At the sides of the vat 4, situated immediately above the latter, there are burners (not illustrated) housed inside burner blocks, preferably chosen from among standard ones with a minimum height of 64 mm, which have the purpose of heating the lateral parts of the molten glass stream in order to maintain thermal homogeneity with the central zone, which in the meantime is cooled by introducing cooling air.

The superstructure, via protuberances 6 which extend downward, innovatively, until practically touching the surface of the molten glass, being at a distance of only 1-2 mm therefrom (unlike in the prior art, where they remain at a distance of over 50 mm from the molten glass), enables three substantially separate areas to be created: two lateral areas 7 for the combustion fumes and a central area 8 for the cooling air.

For each module 2, the superstructure 5 is substantially composed of the following elements:
- An initial block 9
- One or more intermediate blocks 10
- An end block° 11
- One or more "C" shaped elements 12 covering a cooling air duct 13.

The blocks 9, 10 and 11 are very similar to one another and differ substantially in that the initial block 9 is provided with an initial closing element 14 of the duct 13 defining an air inlet opening 15, whereas the end block 11 is analogously provided with an end closing element 16 of the duct 13 defining an air outlet opening 17.

The "C" shaped elements 12 forming the duct 13 are applied on the intermediate blocks 10.

The cooling air duct 13 communicates with the central area 8 through a plurality of vertical air channels 18. Each lateral area 7 communicates, through a plurality of vertical fume channels 19, with a corresponding fume duct 20 (right and left) defined in the blocks 9, 10 and 11.

21 indicates a hole for introducing a pyrometer or thermocouple, not illustrated, for measuring the temperature of the molten glass, according to known methods, so that there is in actual fact no passage either of air or fumes through the hole 21.

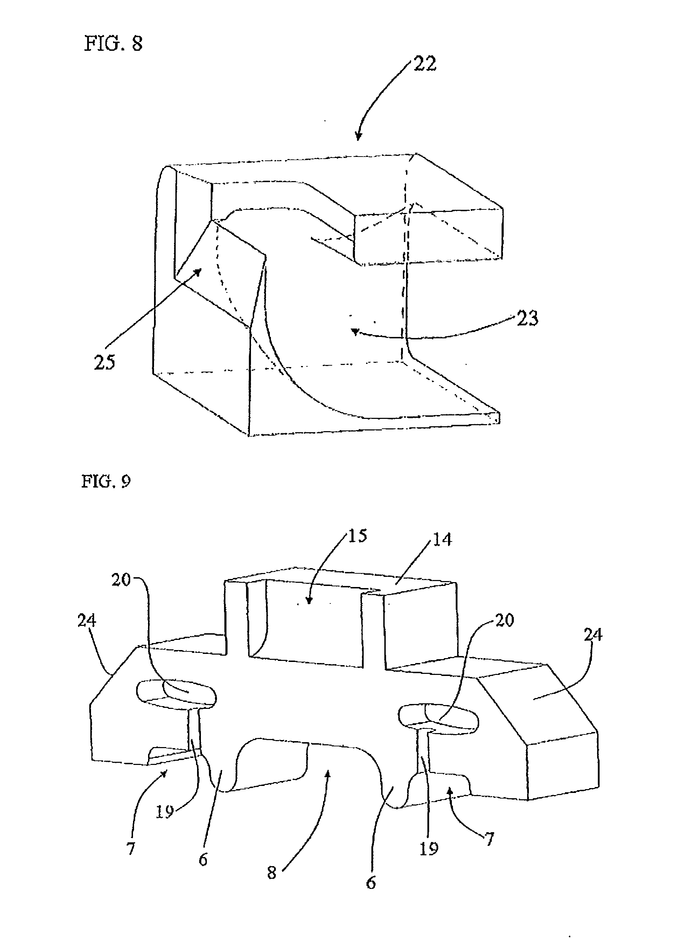

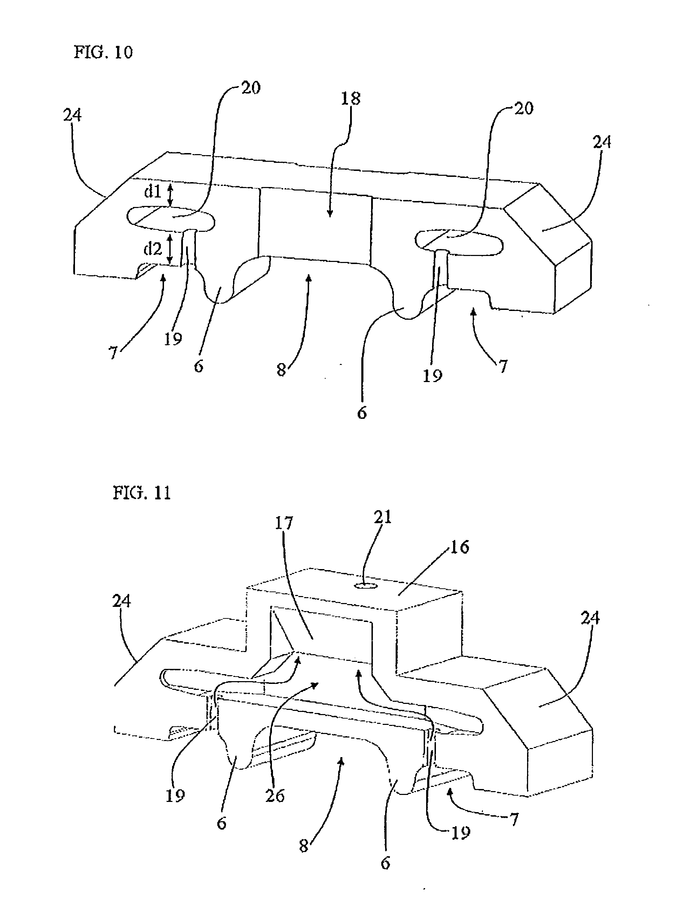

With reference to figures 9, 10 and 11, respectively illustrating the blocks 9, 10 and 11, it is clearly visible therein how the blocks are similar to one another, all of them being provided with lower protuberances 6, also called nipples, innovatively dimensioned so as to lap the stream of molten glass, and all defining a pair of fume ducts 20 with a substantially oval vertical cross section, which only in the end block 11 appear to communicate with each other (in a chamber 26) toward an opening 17 also used as an air outlet, where there is provided, as described further below, a Venturi effect device or "Venturi block" 22 defining a cooling air outlet chute 23.

All of the blocks 9, 10 and 11 have original lateral chamfers 24 that extend for about 30-50% of the total height of the intermediate block 10 and about 10-25% of the size of the blocks diagonal to the forehearth 1.

The innovative incorporation of the fume ducts 20 in the blocks 9, 10 and 11 of the superstructure 5, as well as the innovative presence of the chamfers 24, advantageously permit a reduction in the refractory material used - the length of the forehearth being equal - and thus cost savings; moreover, a better and more homogeneous distribution of the stresses inside the blocks is achieved (smaller variation in bending moment), with a consequent decrease in the formation of cracks and in the possibility of the superstructure collapsing.

In particular, the lateral chamfers 24 allow the removal of material from the superstructure where high mechanical strength is not required.

The central part of the blocks in fact has a greater height (compared to prior art solutions), the bending moment being equal.

Furthermore, in order to improve the distribution of internal stresses, the fume ducts 20 are defined in each initial 9, intermediate 10 or end 11 block, in the upper part of the block itself, i.e. the distance (d₁) between an upper edge of the fume ducts 20 and an immediately upper edge of each block, is less than the distance (d₂) between a lower edge of the fume ducts 20 and an immediately lower edge of each block.

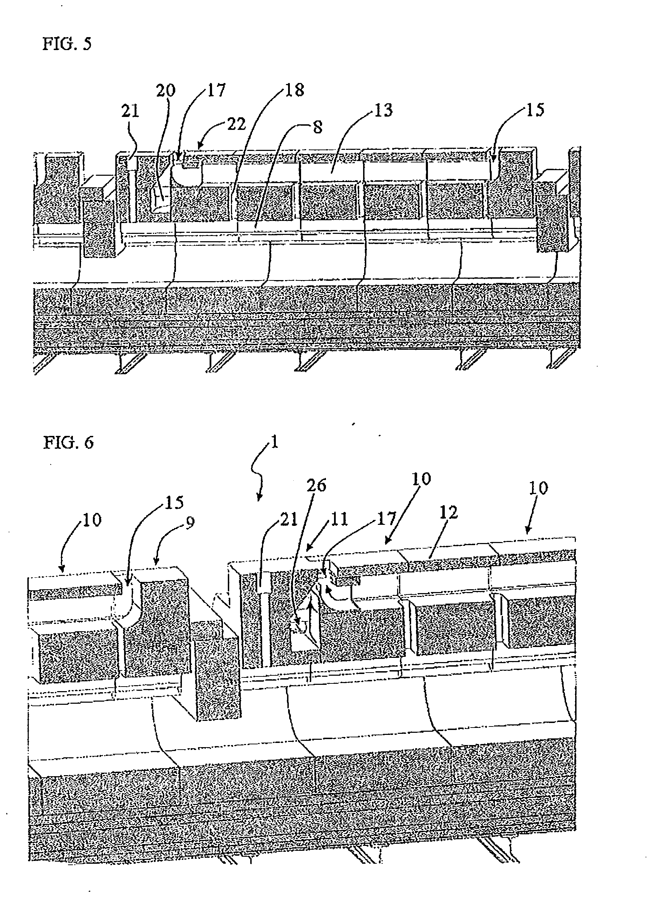

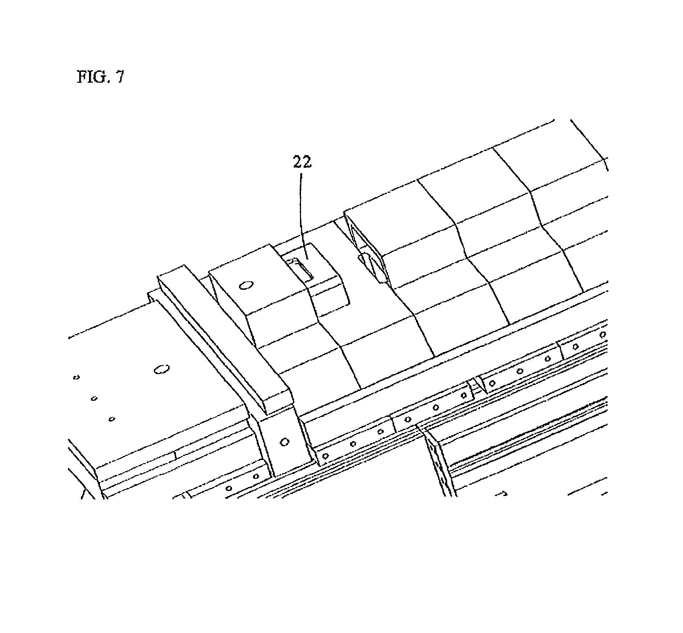

The "Venturi block" 22 illustrated in figures 6, 7 and 8 preferably rests upon the superstructure 5 on the inside of a "C" shaped element 12. More precisely, it rests upon the intermediate block 10 which precedes the end block 11.

Inside the Venturi block 22 there is defined a chute 23 for conveying cooling air toward to the air outlet opening 17 present in the duct 13.

The Venturi block is in fact open at the top to create a continuity between the duct 13 (defined by the "C"-shaped elements 12) and the outlet opening 17 defined in the end closing element 16 of the end block 11.

Furthermore, at the upper opening of the Venturi block 22 there is defined a lateral slit 25 communicating with the chamber 26 that joins the fume ducts 20.

As a result, the air that exits through the opening 17 will automatically entrain the fumes as well, and the extraction of fumes will increase as the degree of cooling increases.

Thanks to this solution, it is possible to eliminate the fume and air pressure control systems of traditional forehearths and to eliminate the air and fume chimneys, as well as the associated air curtains, i.e. it is possible to dispense with the elements A, B, C and D of figure 1 regarding the prior art. The fume ducts 20 incorporated within the blocks 9, 10 and 11 moreover avoid the use of the "L" shaped blocks (E in figura 1) and the angular end elements of the prior art.

Advantageously, the forehearth of the present invention can achieve an efficiency of up to 98% for coloured soda-lime glass and 99% for white glass.

This efficiency is the consequence of a variety of factors:
- a better separation between the central area 8 and the lateral areas 7 (due to the presence of nipples 6 that lap the molten glass);
- the presence of the "Venturi block" 22: given a higher glass flow rate, it is necessary to extract a greater amount of heat from the central area by increasing the flow of cooling air, which, by virtue of the action of the Venturi block 22, induces an increase in the extraction of fumes, thus cooling the lateral areas to a greater degree, so that the latter require less heating (provided by the lateral burners) as compared to the prior art;
- an understructure 3 which is more insulated overall than in the prior art, and above all a superstructure 5 which is less insulated overall and which can be more easily managed than in the prior art.

The present invention also achieves a reduction in cracks (as a result of the improved distribution of internal stresses) and in the use of refractory material (the fume ducts 20 having been incorporated in the blocks 9, 10 and 11), and thus a reduction in costs as well.

Moreover, the superstructure is extremely easy to assemble, being composed of only three types of blocks (initial, intermediate and end) and a smaller number of accessory components ("C"-shaped elements, Venturi block), without there being any need to use air chimneys, fume chimneys, "L"-shaped blocks, fume duct closing triangles or air duct closing rectangles, all of which are envisaged by the prior art.

The combustion and cooling equipment is also reduced, because the only pipes arriving at the forehearth are the cooling air duct and combustion mixture pipes, the air curtain pipes envisaged by the prior art being no longer necessary.

## Claims

1. A forehearth (1) or working-end for glass furnace of the type including one or more modules (2), each one having:
- an understructure (3) in refractory and insulating material in which a vat (4) is defined into which the molten glass flows;
- a superstructure (5) including a cooling air duct (13) and a pair of lateral fume ducts (20), said ducts (13, 20) communicating with the vat area (4) into which the molten glass flows,
**characterised in that** in an end region of the cooling air duct (13), next to an outlet opening (17), a Venturi effect device or "Venturi block" (22) is provided, into which both the air from the cooling air duct (13) and the fumes from the fume ducts (20) flow, shaped in such a way that the cooling air exiting the opening (17) causes the fumes to be extracted from the fume ducts (20).

2. The forehearth according to claim 1, wherein the "Venturi block" (22) includes a chute (23) into which the cooling air duct (13) air is piped and a slit (25) into which the fumes from the fume ducts (20) flow.

3. The forehearth according to claim 1 or 2, wherein the "Venturi block" (22) is inserted in the superstructure (5) in the cooling air duct (13) next to an end block (11) of the superstructure (5).

4. The forehearth according to claim 1, wherein the lateral fume ducts (20) are integrated into the superstructure (5).

5. The forehearth according to claim 1, wherein the superstructure (5) includes, for each module (2) making up the forehearth (1):
- an initial block (9) including an initial closing element (14) of the cooling air duct (13) defining an air inlet opening (15);
- one or more intermediate blocks (10) similar to each other that may differ in their size in the direction of the forehearth (1);
- an end block (11) including an end closing element (16) of the cooling air duct (13) defining an air outlet opening (17).

6. The forehearth according to claim 5, wherein internally the initial block (9), the intermediate blocks (10) and the final block (11) together define the fume ducts (20).

7. The forehearth according to claim 6, wherein the fume ducts (20) are defined in each initial (9), intermediate (10) or end (11) block in the upper part of the block itself, namely the distance (d₁) between an upper edge of the fume ducts (20) and an immediately upper edge of each block, is less than the distance (d₂) between a lower edge of the fume ducts (20) and an immediately lower edge of each block.

8. The forehearth according to claim 5, wherein the blocks (9, 10, 11) making up the superstructure (5) have substantial lateral chamfers (24) that involve about 30-50% of the height of the intermediate block (10) and about 10-25% of the size of the blocks diagonal to the forehearth (1).

9. The forehearth according to claim 1, wherein the fume ducts (20) have an oval-shaped vertical section.

10. The forehearth according to claim 1, wherein the superstructure (5) includes lower protuberances (6) shaped in such a way as to lap the molten glass that flows into the vat (4) in such a way as to define three substantially separated areas: a central area (8) where the cooling air flows and two lateral areas (7) where fumes are present.

11. The forehearth according to claim 1, wherein the fume ducts (20) lead into a single upper opening (17) of the superstructure (5).

12. A procedure for the extraction of fumes from a forehearth (1) or working-end for glass furnace of the type including one or more modules (2) each one having:
- an understructure (3) in refractory and insulating material in which a vat (4) is defined into which the molten glass flows;
- a superstructure (5) including a cooling air duct (13) and a pair of lateral fume ducts (20), said ducts (13, 20) communicating with the vat area (4) into which the molten glass flows,
**characterised in that** the cooling air, exiting the cooling air duct (13) through an outlet opening (17), also drags and extracts the fumes in the fume ducts (20) by Venturi effect, which then flow into the cooling air next to said opening (17).

## Patentansprüche

1. Vorherd (1) oder Bearbeitungsende für einen Glasofen des Typs, der ein oder mehrere Module (2) umfasst, wobei jedes Folgendes aufweist:
- eine Unterstruktur (3) aus feuerfestem und isolierendem Material, in der eine Wanne (4) definiert ist, in die das geschmolzene Glas strömt;
- eine Oberstruktur (5), umfassend einen Kühlluftkanal (13) und ein Paar lateraler Rauchkanäle (20), wobei die Kanäle (13, 20) mit dem Wannenbereich (4), in den das geschmolzene Glas strömt, in Verbindung steht,
**dadurch gekennzeichnet, dass** in einem Endgebiet des Kühlluftkanals (13), neben einer Auslassöffnung (17), eine Venturi-Effekt-Vorrichtung bzw. ein "Venturiblock" (22) bereitgestellt ist, in den sowohl die Luft aus dem Kühlluftkanal (13) als auch der Rauch aus den Rauchkanälen (20) strömt, der so geformt ist, dass die aus der Öffnung (17) austretende Kühlluft eine Extraktion des Rauchs aus den Rauchkanälen (20) verursacht.

2. Vorherd nach Anspruch 1, wobei der Venturiblock (22) eine Rutsche (23) umfasst, in welche die Luft der Kühlluftkanäle (13) geleitet wird sowie einen Schlitz (25), in den der Rauch aus den Rauchkanälen (20) strömt.

3. Vorherd nach Anspruch 1 oder 2, wobei der Venturiblock (22) in die Oberstruktur (5) in den Kühlluftkanal (13) neben einem Endblock (11) der Oberstruktur (5) eingefügt ist.

4. Vorherd nach Anspruch 1, wobei die lateralen Rauchkanäle (20) in die Oberstruktur (5) integriert sind.

5. Vorherd nach Anspruch 1, wobei die Oberstruktur (5) für jedes Modul (2), das den Vorherd (1) bildet, Folgendes umfasst:
- einen Anfangsblock (9), umfassend ein Anfangsschließelement (14) des Kühlluftkanals (13), das eine Lufteinlassöffnung (15) definiert;
- einen oder mehrere ähnliche Zwischenblöcke (10), die sich in der Richtung des Vorherds (1) in ihrer Größe unterscheiden können;
- einen Endblock (11), umfassend ein Endschließelement (16) des Kühlluftkanals (13), das eine Luftauslassöffnung (17) definiert;

6. Vorherd nach Anspruch 5, wobei der Anfangsblock (9), die Zwischenblocks (10) und der Endblock (11) gemeinsam innen die Rauchkanäle (20) bilden.

7. Vorherd nach Anspruch 6, wobei die Rauchkanäle (20) in jedem Anfangs- (9), Zwischen- (10) oder Endblock (11) im oberen Teil des Blocks definiert sind, d. h. der Abstand (d₁) zwischen einer oberen Kante der Rauchkanäle (20) und einer unmittelbaren oberen Kante eines jeden Blocks ist geringer als der Abstand (d₂) zwischen einer unteren Kante der Rauchkanäle (20) und einer unmittelbaren unteren Kante eines jeden Blocks.

8. Vorherd nach Anspruch 5, wobei die die Oberstruktur (5) bildenden Blöcke (9, 10, 11) im Wesentlichen laterale Abschrägungen (24) aufweisen, die ca. 30-50 % der Höhe des Zwischenblocks (10) und etwa 10-25 % der Größe des Blocks diagonal zum Vorherd (1) ausmachen.

9. Vorherd nach Anspruch 1, wobei die Rauchkanäle (20) einen vertikal ovalförmigen Querschnitt aufweisen.

10. Vorherd nach Anspruch 1, wobei die Oberstruktur (5) untere Ausstülpungen (6) umfasst, die so geformt sind, dass das geschmolzene Glas, das in die Wanne (4) strömt, so überlappt wird, dass drei im Wesentlichen getrennte Bereiche definiert werden: ein zentraler Bereich (8), in dem die Kühlluft strömt und zwei laterale Bereiche (7), in denen sich der Rauch befindet.

11. Vorherd nach Anspruch 1, wobei die Rauchkanäle (20) in eine einzelne obere Öffnung (17) der Oberstruktur (5) führen.

12. Verfahren zur Extraktion von Rauch aus einem Vorherd (1) oder einem Bearbeitungsende für einen Glasofen des Typs, der ein oder mehrere Module (2) umfasst, wobei jedes Folgendes aufweist:
- eine Unterstruktur (3) aus feuerfestem und isolierendem Material, in der eine Wanne (4) definiert ist, in die das geschmolzene Glas strömt;
- eine Oberstruktur (5), umfassend einen Kühlluftkanal (13) und ein Paar lateraler Rauchkanäle (20), wobei die Kanäle (13, 20) mit dem Wannenbereich (4), in den das geschmolzene Glas strömt, in Verbindung steht,
**dadurch gekennzeichnet, dass** die Kühlluft, die durch eine Auslassöffnung (17) aus dem Kühlluftkanal (13) austritt, ferner durch den Venturi-Effekt den Rauch in die Rauchkanäle (20) einzieht und extrahiert, der anschließend in die Kühlluft neben der Öffnung (17) strömt.

## Revendications

1. Avant-corps (1) ou extrémité de travail pour four à verre du type comprenant un ou plusieurs modules (2), chacun avec :
- une sous-structure (3) en matériau réfractaire et isolant dans laquelle est réalisée une cuve (4), dans laquelle s'écoule le verre fondu ;
- une superstructure (5) incluant un conduit d'air de refroidissement (13) et une paire de conduits de fumée latéraux (20), lesdits conduits (13, 20) communiquant avec la zone de cuve (4) dans laquelle s'écoule le verre fondu,
**caractérisé en ce que**, dans une zone terminale du conduit d'air de refroidissement (13), à côté d'une ouverture de sortie (17), se trouve un dispositif effet Venturi ou « bloc Venturi » (22), dans lequel circulent aussi bien l'air provenant du conduit d'air de refroidissement (13) que les fumées provenant des conduits de fumée (20), avec une forme telle que l'air de refroidissement sortant de l'ouverture (17) occasionne l'extraction des fumées des conduits de fumée (20).

2. Avant-corps selon la revendication 1, dans lequel le « bloc Venturi » (22) présente un toboggan (23) dans lequel est canalisé l'air du conduit d'air de refroidissement (13), et une fente (25) dans laquelle s'écoulent les fumées provenant des conduits de fumée (20).

3. Avant-corps selon les revendications 1 ou 2, dans lequel le « bloc Venturi » (22) est introduit dans la superstructure (5), dans le conduit d'air de refroidissement (13), à côté d'un bloc terminal (11) de la superstructure (5).

4. Avant-corps selon la revendication 1, dans lequel les conduits de fumée latéraux (20) sont intégrés à la superstructure (5).

5. Avant-corps selon la revendication 1, dans lequel la superstructure (5) présente, pour chaque module (2) composant l'avant-corps (1) :
- un bloc initial (9) comprenant un élément de fermeture initial (14) du conduit d'air de refroidissement (13) formant une ouverture d'entrée de l'air (15) ;
- un ou plusieurs blocs intermédiaires (10) similaires l'un à l'autre qui peuvent varier de taille dans la direction de l'avant-corps (1) ;
- un bloc terminal (11) comprenant un élément de fermeture terminal (16) du conduit d'air de refroidissement (13) formant une ouverture de sortie de l'air (17).

6. Avant-corps selon la revendication 5, dans lequel le bloc initial (9), les blocs intermédiaires (10) et le bloc final (11) déterminent ensemble, à l'intérieur, les conduits de fumée (20).

7. Avant-corps selon la revendication 6, dans lequel les conduits de fumée (20) sont déterminés dans chaque bloc initial (9), intermédiaire (10) ou terminal (11) dans la partie supérieure du bloc, soit la distance (d₁) entre un bord supérieur des conduits de fumée (20) et un bord immédiatement supérieure de chaque bloc, est inférieure à la distance (d₂) entre un bord inférieur des conduits de fumée (20) et un bord immédiatement inférieur de chaque bloc.

8. Avant-corps selon la revendication 5, dans lequel les blocs (9, 10, 11) composant la superstructure (5), présentent des biseaux latéraux importants (24) qui intéressent à peu près 30-50% de la hauteur du bloc intermédiaire (10) et à peu près 10-25% de la taille des blocs diagonale à l'avant-corps (1).

9. Avant-corps selon la revendication 1, dans lequel les conduits de fumée (20) présentent une section verticale ovale.

10. Avant-corps selon la revendication 1, dans lequel la superstructure (5) comprend des saillies inférieures (6) avec une forme telle qu'elles lapent le verre fondu qui s'écoule dans la cuve (4), de manière à former trois zones essentiellement séparées : une zone centrale (8) où l'air de refroidissement s'écoule, et deux zones latérales (7) où les fumées sont présentes.

11. Avant-corps selon la revendication 1, dans lequel les conduits de fumée (20) débouchent dans une seule ouverture supérieure (17) de la superstructure (5).

12. Procédé d'extraction de fumées à partir d'un avant-corps (1) ou d'une extrémité de travail pour four à verre du type comprenant un ou plusieurs modules (2), chacun avec :
- une sous-structure (3) en matériau réfractaire et isolant dans laquelle est réalisée une cuve (4), dans laquelle s'écoule le verre fondu ;
- une superstructure (5) incluant un conduit d'air de refroidissement (13) et une paire de conduits de fumée latéraux (20), lesdits conduits (13, 20) communiquant avec la zone de cuve (4) dans laquelle s'écoule le verre fondu,
**caractérisé en ce que** l'air de refroidissement, sortant du conduit d'air de refroidissement (13) par une ouverture de sortie (17), entraîne et extrait aussi les fumées dans les conduits de fumée (20) par effet Venturi, qui rejoignent ensuite l'air de refroidissement près de ladite ouverture (17).
